# EUROPEAN PATENT APPLICATION

(11) **EP 3 412 480 A1**
(43) Date of publication of application: **12.12.2018**
(21) Application number: 17747788.2
(22) Date of filing: 03.02.2017
(51) Int. Cl.: B60G 7/00, F16C 11/06, B29C 45/14

(54) **BALL JOINT AND MANUFACTURING METHOD THEREFOR**

(30) Priority: 04.02.2016 KR 20160014326
(71) Applicant: Iljin Co., Ltd., Gyeongju-si, Gyeongsangbuk-do 38073 (KR)
(72) Inventor: KWON, Ig Jin, Gyeongju-si Gyeongsangbuk-do 38051 (KR); JEONG, Se Woong, Ulsan 44750 (KR); KWON, Hyuk, Seoul 05409 (KR)
(74) Representative: BRP Renaud & Partner mbB Rechtsanwälte Patentanwälte Steuerberater
(86) International application number: PCT/KR2017/001206
(87) International publication number: WO 2017/135743

(57) **Abstract**

A ball joint is disclosed. The ball joint comprises: a ball stud comprising a ball; a bearing supporting the ball of the ball stud by surrounding same; a case bushing accommodating the bearing and one portion of the ball stud; a ball joint mounting case made of carbon fiber reinforced plastic (CFRP), accommodating the case bushing and coupling to a suspension arm; and a case cap accommodated inside the case bushing.

## Description

### TECHNICAL FIELD

The present disclosure relates to a ball joint and a manufacturing method thereof, and more particularly, to a ball joint that is manufactured using a hot press molding method of a carbon fiber-reinforced plastic (CFRP) and a plastic injection molding method and to a manufacturing method of such a ball joint.

### BACKGROUND

Generally, a suspension of a vehicle is an apparatus for connecting a vehicle body and a wheel, and includes a spring for absorbing vibration or shock transmitted from a road surface to the vehicle body, a shock absorber for adjusting the operation of the spring, a suspension arm or link for controlling the operation of a wheel, and so on.

For the suspension arm or link or the like of the suspension as described above, a ball universal joint or a ball joint, a bush, and so on are used in order to connect the suspension to the vehicle body or the wheel such that the suspension is movable relative to the vehicle body or the wheel.

For example, one end of a lower control arm that supports a lateral force, a longitudinal force, and a vertical force input through the wheel during running of the vehicle is connected to a knuckle fastened in to the wheel via a ball joint in order to steer the wheel, and the other end of the lower control arm is connected to the vehicle body through a bush.

The above-described conventional ball joint has a structure in which the ball of a ball stud is rotatably inserted into a housing, and includes a ball stud having a ball made of a rigid body, a housing or a ball joint case enclosing the ball stud, a bearing interposed between the housing and the ball of the ball stud so as to make the ball stud freely movable, a dust cover that prevents foreign matter from infiltrating into the housing, and a ball joint mounting case that accommodates the ball joint case and is mounted on a lower control arm.

The mounting cases of such conventional ball joints, which were used, were made of a steel material. However, recently, for the purpose of improving the fuel efficiency of a vehicle, the mounting cases of ball joints have been manufactured through a forging method using lightweight aluminum, rather than steel.

However, because weight reduction of the ball joints, which are used in vehicles in large numbers, can further improve the fuel efficiency of a vehicle, development of a ball joint having further reduced weight has become necessary.

### SUMMARY

The present disclosure has been made in view of the above circumstances, and the present disclosure provides a ball joint and a method of manufacturing the ball joint, in which a more effective weight reduction can be achieved by higher weight saving and durability can also be enhanced.

A ball joint according to an embodiment of the present disclosure may include: a ball stud including a ball; a bearing configured to enclose and support the ball of the ball stud; a case bush configured to accommodate a portion of the ball stud and the bearing; a ball joint mounting case configured to accommodate the case bush and fastened to a suspension arm, the ball joint mounting case being made of a carbon fiber-reinforced plastic (CFRP); and a case cap accommodated in the case bush.

In an embodiment, the ball joint may further include: a dust cover configured to cover an upper portion of the case bush and an upper portion of the ball joint mounting case; and a ring clip configured to fix the dust cover to the ball joint mounting case.

In an embodiment, at least one bolt mounting bush may be inserted into and integrally coupled to the ball joint mounting case.

In an embodiment, the suspension arm is a lower control arm, and the ball joint mounting case may be mounted on one end of the lower control arm.

In an embodiment, the case bush may include a cylindrical bush body having a bottom face and an opening on the opposite side of the bottom face.

In an embodiment, a ring-shaped engagement protrusion may be formed on an upper portion of an outer face of the bush body so as to integrally protrude radially outwards.

In an embodiment, a circular rim may be formed on the bottom face so as to extend radially outwards.

In an embodiment, a corner portion protruding radially outward may be formed at a predetermined portion of the outer face between the engagement protrusion and the rim.

In an embodiment, the case bush may be formed of a steel material and treated with a phosphoric acid anodizing.

In an embodiment, the case bush may be applied with a corrosion-resistant primer.

In an embodiment, a seating step may be formed on an inner face of the case bush so as to protrude radially inwards such that the case cap is seated and supported on the seating step.

In an embodiment, the bolt mounting bush may include a cylindrical bush body having openings on opposite sides thereof.

In an embodiment, a rim may be integrally formed on an upper portion of an outer face of the bush body so as to extend radially outwards.

In an embodiment, at least one engagement protrusion may be integrally formed on the outer face of the bush body so as to extend in a height direction and protrude radially outwards.

In an embodiment, the bolt mounting bush may be formed of a steel material, treated with phosphoric acid anodizing, and applied with a corrosion-resistant primer.

In an embodiment, the ball joint mounting case may be made of CFRP through a hot press method.

A manufacturing method of a ball joint according to another embodiment of the present disclosure may include: manufacturing at least one mounting bush and a case bush and integrally coupling the mounting bush and the case bush to a ball joint mounting case; manufacturing a ball stud including a ball and a bearing and coupling the bearing to the ball stud so as to enclose the ball; and manufacturing a case cap and assembling by inserting the case cap into the case bush together with the assembly of the ball stud and the bearing.

In an embodiment, the ball joint mounting case may be made of carbon fiber-reinforced plastic.

In an embodiment, the ball joint mounting case may be manufactured with the carbon fiber-reinforced plastic by a hot press method.

In an embodiment, a charge in which a product shape is considered may be manufactured by using carbon chips, and the ball joint mounting case may be manufactured by inserting the charge into a mold, and applying heat and pressure to the charge.

In an embodiment, the carbon chips may be chips cut from a prepreg (UD tape) or a tow prepreg.

In an embodiment, the carbon chips may be made of a mixture of carbon fibers and an epoxy resin.

In an embodiment, the method may further include covering the ball stud with a dust cover and then fixedly fitting a ring clip on the dust cover.

In an embodiment, in the coupling the bearing to the ball stud so as to enclose the ball, lubricant may be injected.

In an embodiment, in a step of the covering the ball stud with the dust cover and then fixedly fitting the ring clip on the dust cover, lubricant may be injected.

In an embodiment, in the step of manufacturing the case cap and assembling by inserting the case cap into the case bush together with the assembly of the ball stud and the bearing, the case bush is treated with swaging.

As described above, according to the ball joint and the method of manufacturing the ball joint according to an embodiment of the present disclosure, the ball joint mounting case is made of a carbon fiber-reinforced plastic by a hot press method, and the case bush is injection molded using a plastic material. Thus, it is possible to reduce the weight by 40% or more compared with a conventional ball joint made of a steel material, and the fuel efficiency of the vehicle can be further improved when the ball joint of the embodiment of the present disclosure is applied to a vehicle.

In addition, the case bush is injection molded in the state in which the ball stud and the bearing are inserted into the inside of the ball joint mounting case. Thus, the high strength, high durability, and impact resistance can be further improved. In addition, when the ball joint is applied to a suspension arm such as a lower control arm of a vehicle, the steering performance and ride comfort of the vehicle can be improved.

Further, since a layout pattern design is unnecessary, the ball joint can be designed and analyzed easily, and since a lamination process according to the layout pattern is not required, the manufacturing time of a component of a composite material can be remarkably shortened and the productivity can be improved.

In addition, since the bolt mounting bush made of a metal is inserted into the ball joint mounting case so as to be integrally formed, the durability can be improved more effectively, and layout can be secured easily.

### BRIEF DESCRIPTION OF THE DRAWINGS

FIG. 1 is a perspective view of a ball joint according to an embodiment of the present disclosure;
FIG. 2 is a bottom side perspective view of the ball joint according to the embodiment of the present disclosure;
FIG. 3 is a cross-sectional view of the ball joint according to the embodiment of the present disclosure;
FIG. 4 is a perspective view of a lower control arm equipped with the ball joint according to the embodiment of the present disclosure;
FIG. 5 is a perspective view of a case bush of the ball joint according to the embodiment of the present disclosure;
FIG. 6 is a cross-sectional view of the case bush of the ball joint according to the embodiment of the present disclosure;
FIG. 7 is a perspective view of a cap of the ball joint according to the embodiment of the present disclosure;
FIG. 8 is a perspective view of a bolt mounting bush;
FIG. 9 is an explanatory view illustrating a process for manufacturing a ball joint mounting case through a manufacturing method according to an embodiment of the present disclosure; and
FIG. 10 is an explanatory diagram of a ball joint manufacturing method according to an embodiment of the present disclosure.

### DETAILED DESCRIPTION

Hereinafter, embodiments of the present disclosure will be described in detail with reference to the accompanying drawings.

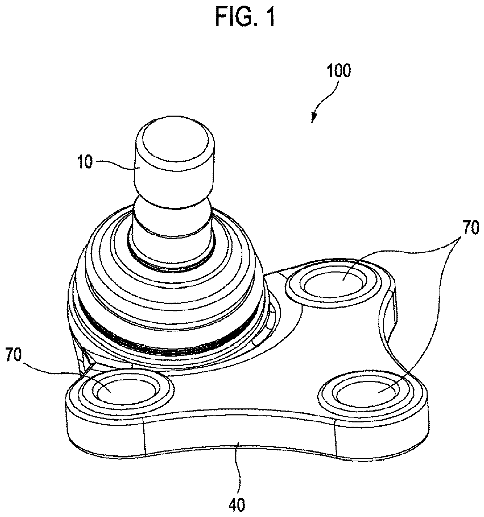

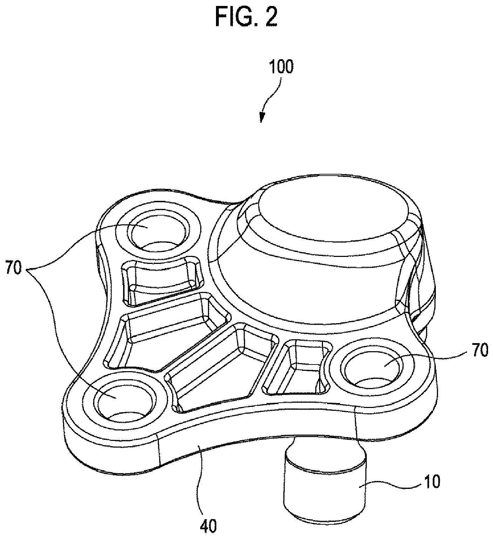

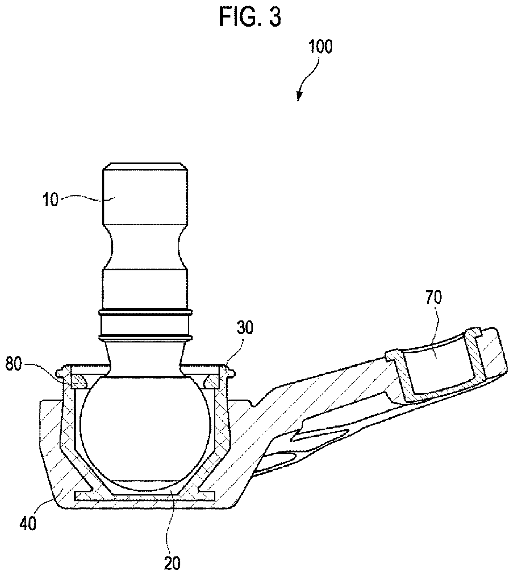

Referring to FIGS. 1 to 3, a ball joint 100 according to an embodiment of the present disclosure may include: a ball stud 10 made of a rigid body; a bearing 20 that encloses the ball of the ball stud 10 and supports the ball stud 10 to be freely rotatable; a case bush 30 that accommodates a portion of the ball stud 10 and the bearing 20; a ball joint mounting case 40 that accommodates the case bush 30 and is fastened to a suspension arm (not illustrated); a dust cover 50 that covers the upper portions of the case bush 30 and the ball joint mounting case 40 so as to prevent foreign matter from infiltrating into the ball joint mounting case 40; a ring clip 60 that fixes the dust cover 50 to the ball joint mounting case 40; at least one bolt mounting bush 70 inserted into and coupled to the ball joint mounting case 40; and a case cap 80 accommodated in the case bush 30.

The ball joint mounting case 40 may be molded using a CFRP.

The case bush 30 may be formed of a steel material.

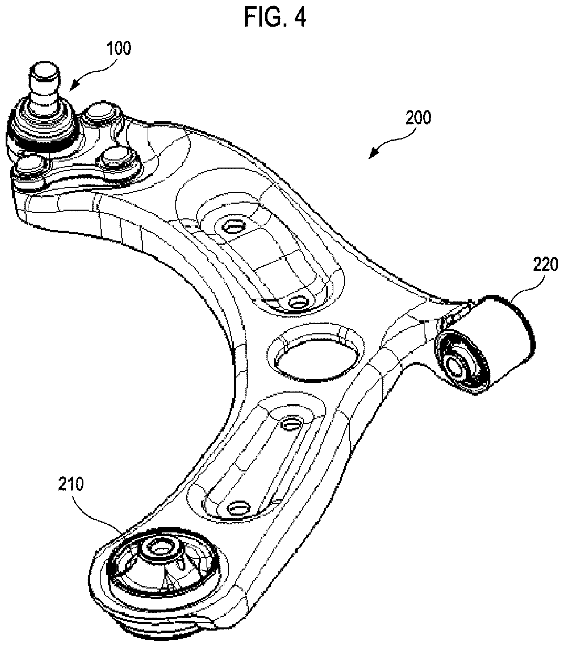

Referring to FIG. 4, the ball joint 100 according to the embodiment of the present disclosure may be mounted on one end of a suspension arm of a vehicle, for example, one end of a lower control arm 200.

That is, the ball joint 100 may be mounted on one end of the lower control arm 200, a first bush 210 may be mounted on the other end of the lower control arm 200, and a second bush 220 may be mounted on a predetermined portion between the ball joint 100 and the first bush 210.

The lower control arm 200 may be connected to a knuckle of a wheel (not illustrated) through the ball joint 100, and the first and second bushes 210 and 220 may be fastened to a vehicle body (not illustrated), so that the wheel can be supported by the vehicle body through the lower control arm 200.

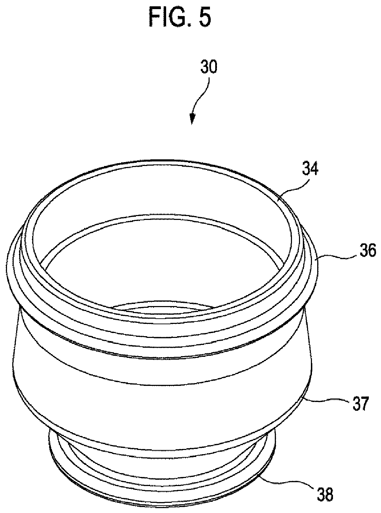

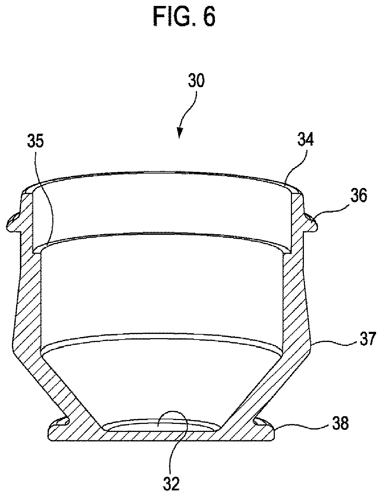

Referring to FIGS. 5 and 6, the case bush 30 inserted into the ball joint mounting case 40 and integrally coupled to the ball joint mounting case 40 includes a cylindrical bush body 34 having a bottom face 32 and an opening on the opposite side of the bottom face 32.

A ring-shaped engagement protrusion 36 may be formed on the outer face of the bush body 34 so as to integrally protrude radially outwards, a circular rim 38 may be formed on the bottom face 32 to extend radially outwards, and a corner portion 37 protruding radially outwards from a predetermined portion of the outer face may be formed between the engagement protrusion 36 and the rim 38.

The engagement protrusion 36, the corner portion 37, and the rim 37 prevent axial separation between the case bush 30 and the ball joint mounting case 40, thereby increasing the coupling force of the case bush 30 and the joint mounting case 40.

In addition, since the case bush 30 is inserted into the ball joint mounting case 40, corrosion resistance can be improved even if the case bush 30 is formed of a steel material.

As described below, since the ball joint mounting case 40 is molded using an epoxy resin having a self-adhesive property, the case bush 30 and the ball joint mounting case 40 can be firmly coupled to each other without using a separate adhesive.

It is possible to improve the wettability on the metal surface of the case bush 30 through a phosphoric acid anodizing treatment.

In addition, it is possible to improve corrosion resistance by applying an anti-corrosion primer.

A seating step 35, on which a case cap 80 is seated and supported, may be integrally formed on the inner face of the case bush 30 to protrude radially inwards.

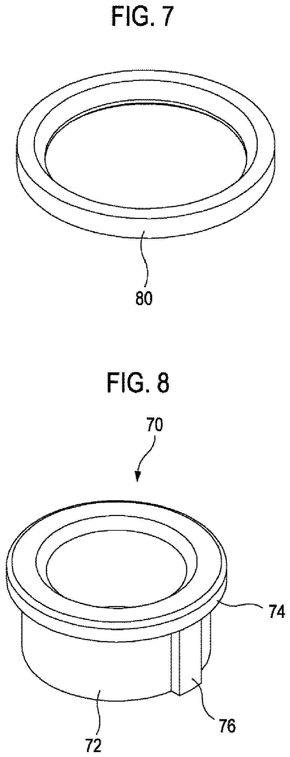

Referring to FIG. 7, the case cap 80 may have a circular ring shape.

Referring to FIG. 8, the bolt mounting bush 70 may include a cylindrical bush body 72 having openings on the opposite sides thereof.

A rim 74 extending radially outwards is integrally formed on the outer face of the bush body 72, so that when the bolt mounting bush 70 is inserted into the ball joint mounting case 40 so as to be integrally coupled thereto, axial separation between the bolt mounting bush 70 and the ball joint mounting case 40 can be prevented, thereby increasing the coupling force.

At least one engagement protrusion 76 may be integrally formed on the outer face of the bush body 72 to extend in the height direction and protrude radially outwards.

The engagement protrusion 76 may serve to prevent rotational slip of the bolt mounting bush 70 when the bolt mounting bush 70 is inserted into and integrally coupled to the ball joint mounting case 40.

It is also possible to improve wettability of the metal surface by a phosphoric acid anodizing treatment on the surface of the bolt mounting bush 70 and it is possible to improve corrosion resistance by applying an anti-corrosion primer.

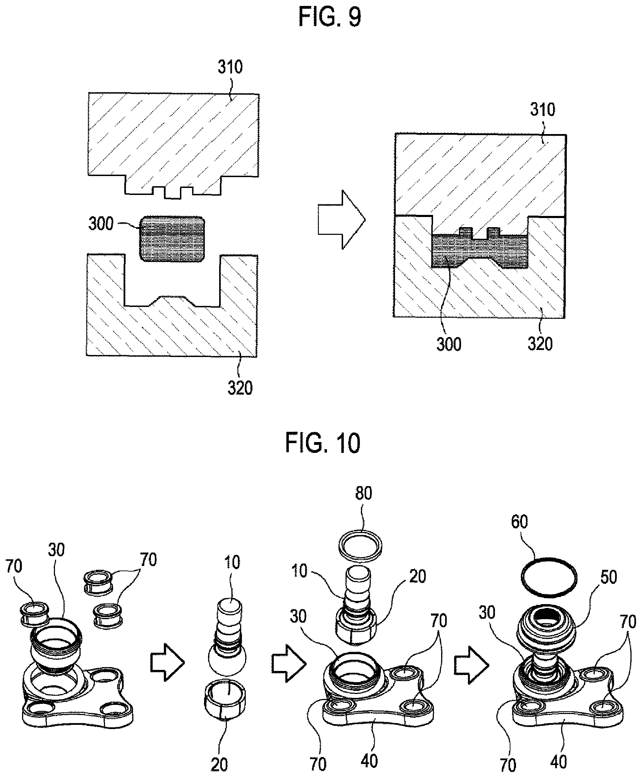

Referring to FIG. 9, the ball joint mounting case 40 may be made of a CFRP through a hot press method.

That is, firstly a charge 300 in which a product shape is considered is manufactured by using carbon chips, the charge 300 is inserted into an upper mold 310 and a lower mold 320, and then the ball joint mounting case may be manufactured by closing the upper mold 310 and applying heat and pressure to the charge 300.

At this time, it is possible to integrally form the bolt mounting bush 70 and the case bush 30 with the ball joint mounting case 40 by inserting the bolt mounting bush 70 and the case bush 30 together into the mold.

As the carbon chips, carbon chips cut from a prepreg (UD tape) or a tow prepreg may be used.

The carbon chips may be made using a mixture of carbon fiber (carbon fiber) and an epoxy resin (fast cure epoxy resin).

The size of the carbon chips is preferably 10 mm to 80 mm in length and 3 mm to 30 mm in width.

The weight of the prepreg (prepreg areal weight) is preferably 100 to 300 gsm (gram per square meter).

Referring to FIG. 10, in the process sequence of the ball joint manufacturing method according to the embodiment of the present disclosure, firstly a case bush 30 and a bolt mounting bush 70 are manufactured and inserted into a mold, a charge 300 is manufactured and inserted into the mold, and a ball joint mounting case 40 is molded by applying heat and pressure in the state in which the mold is closed by mating an upper mold 310 and a lower mold 320 with each other.

Then, the case bush 30 and the bolt mounting bush 70 may be integrally coupled to the ball joint mounting case 40.

Next, an assembly is made by assembling the ball stud 10 and the bearing 20. At this time, it is possible to improve lubrication performance by applying lubricant such as grease to the inner face of the bearing 20 in advance.

Then, the assembly of the ball stud 10 and the bearing 20 and the case cap 80 are inserted into the case bush 30, and are coupled by treating the case bush 30 with swaging.

Finally, the dust cover 50 is covered on the upper portion of the ball stud 10 and fixed with the clip 60, and lubricant is injected as needed, thereby manufacturing the ball joint 100.

While embodiments of the present disclosure have been described, the present disclosure is not limited to the embodiments, and includes all modifications that are easily made by those skilled in the art to which the present disclosure belongs and are thus deemed equivalent to the present disclosure.

## Claims

1. A ball joint comprising:
a ball stud including a ball;
a bearing configured to enclose and support the ball of the ball stud;
a case bush configured to accommodate a portion of the ball stud and the bearing;
a ball joint mounting case configured to accommodate the case bush and fastened to a suspension arm, the ball joint mounting case being made of a carbon fiber-reinforced plastic (CFRP); and
a case cap accommodated in the case bush.

2. The ball joint according to claim 1, further comprising:
a dust cover configured to cover an upper portion of the case bush and an upper portion of the ball joint mounting case; and
a ring clip configured to fix the dust cover to the ball joint mounting case.

3. The ball joint according to claim 1, wherein at least one bolt mounting bush is inserted into and integrally coupled to the ball joint mounting case.

4. The ball joint according to claim 1, wherein the suspension arm is a lower control arm, and the ball joint mounting case is mounted on one end of the lower control arm.

5. The ball joint according to claim 1, wherein the case bush includes a cylindrical bush body having a bottom face and an opening on the opposite side of the bottom face.

6. The ball joint according to claim 5, wherein a ring-shaped engagement protrusion is formed on an upper portion of an outer face of the bush body so as to integrally protrude radially outwards.

7. The ball joint according to claim 6, wherein a circular rim is formed on the bottom face so as to extend radially outwards.

8. The ball joint according to claim 7, wherein a corner portion protruding radially outward is formed at a predetermined portion of the outer face between the engagement protrusion and the rim.

9. The ball joint according to claim 1, wherein the case bush is formed of a steel material and treated with phosphoric acid anodizing.

10. The ball joint according to claim 9, wherein the case bush is applied with a corrosion-resistant primer.

11. The ball joint according to claim 1, wherein a seating step is formed on an inner face of the case bush so as to protrude radially inwards such that the case cap is seated and supported on the seating step.

12. The ball joint according to claim 3, wherein the bolt mounting bush includes a cylindrical bush body having openings on opposite sides thereof.

13. The ball joint according to claim 12, wherein a rim is integrally formed on an upper portion of an outer face of the bush body so as to extend radially outwards.

14. The ball joint according to claim 12, wherein at least one engagement protrusion is integrally formed on the outer face of the bush body so as to extend in a height direction and protrude radially outwards.

15. The ball joint according to claim 3, wherein the bolt mounting bush is formed of a steel material, treated with phosphoric acid anodizing, and applied with a corrosion-resistant primer.

16. The ball joint according to claim 1, wherein the ball joint mounting case is made of a carbon fiber-reinforced plastic through a hot press method.

17. A method for manufacturing a ball joint, the method comprising:
manufacturing at least one mounting bush and a case bush and integrally coupling the mounting bush and the case bush to a ball joint mounting case;
manufacturing a ball stud including a ball and a bearing and coupling the bearing to the ball stud so as to enclose the ball; and
manufacturing a case cap and assembling by inserting the case cap into the case bush together with the assembly of the ball stud and the bearing.

18. The method according to claim 17, wherein the ball joint mounting case is made of a carbon fiber-reinforced plastic.

19. The method according to claim 18, wherein the ball joint mounting case is manufactured with the carbon fiber-reinforced plastic by a hot press method.

20. The method according to claim 17, wherein a charge in which a product shape is considered is manufactured by using carbon chips, and the ball joint mounting case is manufactured by inserting the charge into a mold and applying heat and pressure to the charge.

21. The method according to claim 20, wherein the carbon chips are cut from a prepreg (UD tape) or a tow prepreg.

22. The method according to claim 20, wherein the carbon chips are made of a mixture of carbon fibers and an epoxy resin.

23. The method according to claim 17, further comprising:
a step of covering the ball stud with a dust cover and then fixedly fitting a ring clip on the dust cover.

24. The method according to claim 17, wherein, in the coupling the bearing to the ball stud so as to enclose the ball, lubricant is injected.

25. The method according to claim 23, wherein, in the step of covering the ball stud with the dust cover and then fixedly fitting the ring clip on the dust cover, lubricant is injected.

26. The method according to claim 17, wherein, in the step of manufacturing the case cap and assembling by inserting the case cap into the case bush together with the assembly of the ball stud and the bearing, the case bush is treated with swaging.
